(19) **Europäisches Patentamt**
**European Patent Office**
**Office européen des brevets**

(11) **EP 0 572 957 B1**

(12) **EUROPEAN PATENT SPECIFICATION**

(45) Date of publication and mention
of the grant of the patent:
**21.01.1998 Bulletin 1998/04**

(51) Int. Cl.$^6$: **B01D 1/22**, B01D 1/24,
C11D 1/29, B01J 2/10,
C11D 1/14, C11D 1/26,
C11D 11/00

(21) Application number: **93108713.4**

(22) Date of filing: **28.05.1993**

(54) **Process for producing powdery anionic surfactant**

Verfahren zur Herstellung von pulverförmigen, anionischen Tensiden

Procédé pour la préparation d'agent tensioactif anionique pulvérulent

(84) Designated Contracting States:
**DE ES GB**

(30) Priority: **01.06.1992 JP 140363/92**

(43) Date of publication of application:
**08.12.1993 Bulletin 1993/49**

(73) Proprietor: **KAO CORPORATION**
**Chuo-ku, Tokyo (JP)**

(72) Inventors:
• **Oyashiki, Tomonori**
**Wakayama-shi, Wakayama-ken (JP)**
• **Wada, Yasushi**
**Wakayama-shi, Wakayama-ken (JP)**
• **Ishikawa, Takeshi**
**Wakayama-shi, Wakayama-ken (JP)**

(74) Representative:
**Grünecker, Kinkeldey,**
**Stockmair & Schwanhäusser**
**Anwaltssozietät**
**Maximilianstrasse 58**
**80538 München (DE)**

(56) References cited:
**EP-A- 0 384 480**      **EP-A- 0 466 243**
**US-A- 4 279 692**

• **DATABASE WPI Week 7621, Derwent**
**Publications Ltd., London, GB; AN 76-39006X &**
**JP-A-51 041 675 (LION FAT & OIL KK) 9 April**
**1976**

## Description

This invention relates to a process for producing a powdery anionic surfactant from an aqueous slurry containing an anionic surfactant.

Powdery anionic surfactants are blended with other surfactants or builders to be used not only in clothing detergents and kitchen detergents but also in foaming agents for dentifrices, powdery shampoos and cleansing agents.

Known processes for drying an anionic surfactant into a powder or grains include ones comprising spray-drying a low-concentration slurry of a moisture content of 60 to 70 wt.% by taking the viscosity into consideration (see JP-A-69698/1980 and JP-A-39307/1978), one comprising flashing a low-concentration slurry into a rotary thin-film evaporator and concentrating the same therein (see JP-A-41675/1976), one comprising spray-drying a high-concentration slurry of a solid concentration of from 60 to 80 wt.% by taking advantage of the minimum viscosity of a slurry of an alkyl sulfate (see JP-A-106428/1979), and one comprising subjecting a paste material for a high-density detergent of a moisture content of from 20 to 35 wt.% to vacuum thin-film drying (see US-A-5,052,122).

However, the processes disclosed in the above JP-A-69698/1980 and JP-A-39307/1978 have a problem that a large-scale drying apparatus and a great deal of drying energy are required, since they have a spray-drying step. Although the process disclosed in the JP-A-41675/1976 requires no large-scale drying apparatus, it requires a great deal of energy for drying and, in addition, it has difficulty in producing a powder from the slurry though it can concentrate the same.

Although the process disclosed in the JP-A-106408/1979 requires no great deal of drying energy since a high-concentration slurry is used, a large-scale drying apparatus is necessary therein. Further, this process has a problem that the final product is contaminated with impurities such as unreacted alcohol in the sulfation reaction conducted in the previous stage.

Although the above US-A-5,052,122 discloses a process for continuously drying a paste material for a high-density detergent by the thin-film drying method, it cannot provide a technically satisfactory process for producing a powdery anionic surfactant per se.

EP-A-0466243 discloses a process for preparing secondary alkyl sulfate-containing surface active compositions substantially free of unreacted organic matter and water, said process comprising (a) sulfating a detergent range olefin having from 8 to 22 carbon atoms with concentrated sulfuric acid, (b) neutralizing the product of step (a) with a base dispersed in a nonionic surfactant having a boiling point higher than that of said detergent range olefin and its corresponding secondary alcohol, (c) saponifying the product of step (b), and (d) passing the product of step (c) through a thin film evaporator to evaporate unreacted organic matter from said product and recovering said product.

The object of the present invention is to provide a process for producing a powdery anionic surfactant which is little contaminated with impurities.

The above object has been solved by providing a process for producing a powdery anionic surfactant which is selected from the group consisting of alkyl sulfates having a linear or branched alkyl or alkenyl group carrying from 8 to 18 carbon atoms and polyoxyalkylene alkyl ether sulfates having a linear or branched alkyl or alkenyl group carrying from 8 to 18 carbon atoms and an average number of moles of addition of ethylene oxide or propylene oxide of at least 0.5, or a mixture of said salts wherein said powdery anionic surfactant is produced by using an evaporator having a heat transfer wall and rotating blades rotating along the inner surface of said heat transfer wall, which comprises feeding said anionic surfactant in the form of an aqueous slurry thereof having a solid concentration of from 60 to 80 wt.% into said evaporator, forming a film of the anionic surfactant on the inner surface of said heat transfer wall by rotating said blades, and scraping the film from the inner heat transfer wall with the rotating blades and powdering while continuously concentrating, drying the aqueous anionic surfactant slurry and blowing air, an inert gas or steam into the evaporator, wherein the ratio of the air, inert gas or steam to be blown is 2 parts by weight or above per 100 parts by weight of the aqueous anionic surfactant slurry.

The evaporator used in the present invention comprises a heat transfer wall and blades rotating along the inner surface of the heat transfer wall (hereinafter referred to as the inner heat transfer wall).

The present invention makes it possible to produce a high-quality powdery anionic surfactant which is white, has a high bulk density and is little contaminated with impurities by using a rotary thin-film evaporator of a small scale.

Now a preferable embodiment of the production process according to the present invention will be described.

The clearance (spacing) between the tip of the rotating blades and the inner heat transfer wall is 10 mm or below.

In the step of feeding the aqueous anionic surfactant slurry into the evaporator, the temperature of the aqueous slurry is controlled to be within a range of from 50 to 140°C.

The temperature of the inner heat transfer wall of the evaporator is controlled to be within a range of from 50 to 140°C.

The pressure in the evaporator is controlled to be within a range of from 0.133 to 66.661 kPa (1 to 500 Torr).

The peripheral speed of the tip of the blade in the evaporator is adjusted to 2 m/s or above.

At least one gas selected from among air, an inert gas having no reactivity with the anionic surfactant and steam is continuously fed into the evaporator at a weight ratio of at least 20 parts by weight per 100 parts by weight of the aqueous anionic surfactant scurry to thereby give a powdery anionic surfactant little contaminated with impurities.

The moisture content of the powdery anionic surfactant obtained from the aqueous anionic surfactant slurry is adjusted to 10% by weight or below.

The bulk density of the powdery anionic surfactant obtained from the aqueous anionic surfactant slurry is adjusted to 0.4 g/ml or above.

The color of a 10 wt.% aqueous solution of the powdery anionic surfactant obtained from the aqueous anionic surfactant slurry is adjusted to KLETT No. 10 or below.

The rotary thin-film evaporator to be used in the process for producing a powdery anionic surfactant according to the present invention is not particularly restricted, so long as it has a basic construction comprising a heat transfer wall which supplies heat to the aqueous anionic surfactant slurry and rotating blades which form a film of the anionic surfactant on the inner surface of this heat transfer wall and scrape the film thus formed therefrom. The rotary thin-film evaporator may have such construction either partly or as a whole.

A preferable example of the rotary thin-film evaporator is one comprising a cylindrical casing vertically set up as the heat transfer wall and rotating blades which rotate while sliding on the inner surface of the heat transfer wall or in close thereto as the rotating blades. The cylindrical casing may be provided at the upper part thereof with a feeding port for the aqueous anionic surfactant slurry and at the lower end thereof with a discharging port for a dried powdery anionic surfactant. Further, the cylindrical casing may be provided on the inner surface thereof with a heating means such as a heating jacket, whereby the inner surface of the cylindrical casing can serve as the inner heat transfer wall.

In such a construction, the aqueous anionic surfactant slurry fed into the rotary thin-film evaporator is rubbed against the inner heat transfer wall by the action of the tips of the rotating blades to thereby form a film of the aqueous slurry. In this step, the formed film runs down along the inner heat transfer wall while receiving the heat transferred from the jacket and the heat of friction evolving between the rotating blades and the film of the aqueous slurry on the inner heat transfer wall, thus being gradually concentrated and dried. The anionic surfactant thus dried is scraped off by the rotating blades and formed into a powdery, granular or flaky product which is then taken out of the discharging port. Accordingly, the term "powdery anionic surfactant" as used herein refers to an anionic surfactant in the powdery, granular or flaky form.

On the other hand, the steam evaporated from the aqueous anionic surfactant slurry is condensed and recovered with, for example, a condenser located outside the evaporator.

In this process, it is important that the solid concentration of the aqueous anionic surfactant slurry is from 60 to 80% by weight, preferably from 65 to 75% by weight. When this concentration exceeds 80% by weight or is lowered to a level less than 60% by weight (except 40% by weight or below), the aqueous slurry sets to gel, which makes its handling difficult. When the solid concentration is lowered to 40% by weight or below, the aqueous slurry becomes flowable again and thus can be easily handled, but the drying load is increased.

Examples of the method for preparing an aqueous anionic surfactant slurry of a solid concentration of from 60 to 80% by weight include one comprising controlling an aqueous slurry of a solid concentration of 40% by weight or below to have a solid concentration of 60 to 80% by weight by preconcentration and one comprising directly preparing a slurry of a high solid concentration by taking advantage of the minimum viscosity of an aqueous slurry.

The anionic surfactant used in the present invention is one or more sulfuric acid salt selected from the group consisting of alkyl sulfates having a linear or branched alkyl or alkenyl group carrying from 8 to 18 carbon atoms, preferably from 10 to 16 carbon atoms, and polyoxyalkylene alkyl ether sulfates having a linear or branched alkyl or alkenyl group carrying from 8 to 18 carbon atoms, preferably from 10 to 16 carbon atoms, and an average number of moles of addition of ethylene oxide or propylene oxide of at least 0.5, preferably 1 to 8.

The anionic surfactant is specifically represented by the following formulae (I) and (II).

Alkyl sulfate:

$$R\text{-}OSO_3M \tag{I}$$

wherein R is a linear or branched alkyl or alkenyl group having from 8 to 18 carbon atoms; and M is an alkali metal or an alkanol-substituted or unsubstituted ammonium salt.

Polyoxyalkylene alkyl ether sulfate:

$$RO\text{-}(C_nH_{2n}O)_mSO_3M \tag{II}$$

wherein R is a linear or branched alkyl or alkenyl group having from 8 to 18 carbon atoms; M is an alkali metal or an alkanol-substituted or unsubstituted ammonium salt; n is 2 or 3; and m is an average number of moles of addition of at least 0.5.

These anionic surfactants include alkali metal salts, ammonium salts and alkanolamine salts, among which alkali metal salts are preferable and sodium salts are still preferable. Specific alkyl sulfates or polyoxyalkylene ether sulfates can be obtained by sulfating higher alcohols or adducts thereof with an alkylene oxide compound (for example, ethylene oxide or propylene oxide). The anionic surfactant thus produced may contain unreacted matters after the sulfation in an amount of 20 wt.% or below, preferably 10 wt.% or below.

Further, additives other than the anionic surfactant may be added to the aqueous anionic surfactant slurry. The additives include alkaline agents such as silicates, carbonates and sesqui-carbonates (for example, Na, K or Mg salts), citrates, divalent metal ion sequestrant such as zeolite, antiredeposition agents such as polyvinylpyrrolidone and carboxymethylcellulose, anticaking agents, and antioxidants, which may be added in a small amount, if necessary. In order to maintain the solid concentration of the powdery anionic surfactant as high as possible, it is preferable to use these additives in an amount of 10 parts by weight or less per 100 parts by weight of the active ingredient of the anionic surfactant.

When the aqueous anionic surfactant slurry is fed into the rotary thin-film evaporator, the temperature of the slurry is to be maintained at 50 to 140°C, preferably at 60 to 100°C. When the temperature of the slurry is below the lower limit as specified above, the slurry becomes so viscous that it can be hardly handled. When the temperature of the aqueous slurry exceeds 140°C, on the other hand, the anionic surfactant undergoes decomposition.

In order to maintain the above-specified temperature of the slurry, it is preferable to appropriately heat the inner heat transfer wall of the rotary thin-film evaporator. For example, the inner heat transfer wall is preferably maintained at a temperature of from 50 to 140° C, still preferably from 70 to 120° C, by introducing heating steam or hot water into, for example, the heating jacket. When the temperature of the inner heat transfer wall is below the lower limit as specified above, the drying rate of the slurry is lowered to lower the efficiency. When the temperature of the inner heat transfer wall exceeds the upper limit as specified above, on the other hand, the anionic surfactant is liable to undergo decomposition or color tone change. The temperature of the inner heat transfer wall can be measured by contacting a thermometer with the back surface of the inner wall. When the aqueous anionic surfactant slurry maintained at a given temperature is fed into the rotary thin-film evaporator, the aqueous slurry is rubbed against the inner heat transfer wall by the action of the tips of the rotating blades to thereby form a film.

The thickness of the anionic surfactant film is to be controlled to 10 mm or less, preferably 5 mm or less, and still preferably 2 mm or less. For this purpose, the clearance between the tips of the rotating blades and the inner heat transfer wall of the rotary thin-film evaporator is to be controlled to 10 mm or less, preferably 5 mm or less, and still preferably 2 mm or less, when the system is run without feeding any material.

The rotational speed of the rotating blades of the rotary thin-film evaporator, expressed in the peripheral speed of the tip of the blades, is 2 m/s or above, preferably 2 to 20 m/s. When the rotational speed is lower than 2 m/s, no good film can be formed in some cases. Regarding the construction of the rotating blades, there are a fixed type unit having blades attached to a rotational shaft in such a manner as to continuously give a constant angle and a variable type unit where the angle between the blades and the inner heat transfer wall varies depending on the force applied thereto. The present invention is restricted to neither of these types.

In the rotary thin-film evaporator, it is preferable that the inside of the evaporator be evacuated. It is preferable, for example, that the pressure in the evaporator ranges from 0.133 to 66.661 kPa (1 to 500 Torr), still preferably from 6.666 to 53.329 kPa (50 to 400 Torr). A pressure less than 0.133 kPa (1 Torr) is not preferable, since a large-scale evacuating unit is required therefor. When the pressure exceeds 66.661 kPa (500 Torr), on the other hand, the drying rate becomes insufficient, which makes the system less efficient.

Specific examples of usable rotary thin-film evaporators of the above type include various ordinary evaporators, for example, those described in "Kagaku Sochi Hyakka Jiten (Encyclopedia of Chemical Apparatus)", ed. by Kagaku Sochi Hyakka Jiten Henshu Iinkai (Kagaku Kogyo-sha, 1971), pages 103 - 104, depending on the conditions as described above. It is particularly effective to use a centrifugal thin-film evaporator provided with rotating blades whereby a film of an aqueous anionic surfactant slurry is formed by the centrifugal force of the rotating blades. Since the final product is a powdery material, it is desirable to use such a vertical evaporator, as the one described above, whereby the dried product can be gravitationally discharged. Examples of such a rotary thin-film evaporator include Kontro, Sevcon (manufactured by Hitachi, Ltd.), Evaolator, Hi-Evaolator (manufactured by Sakura Seisakusho), Luwa thin-film evaporator (manufacture by Luwa AG, Switzerland) and Wiped Film Evaporator (manufactured by SHINKO PANTEC).

In the production process as described above, the aqueous slurry is rapidly concentrated and dried by the heat of friction evolving between the rotating blades and the film of the aqueous slurry on the inner heat transfer wall and the heat transferred from the inner heat transfer wall. The anionic surfactant thus dried is scraped off with the rotating blades to give a powdery, granular or flaky product. Therefore, the drying load in the evaporator is low and a small-scale apparatus is sufficient for the purpose.

Since the powdery surfactant obtained by the production method as described above is under a shearing stress in the drying step, it has a bulk density as high as 0.4 g/ml or above when compared with the conventional spray-dried products. Therefore, the obtained product has a small volume during storage and transportation, which is effective in saving the transportation cost. Further, the water content of the powdery surfactant can be reduced to 10 wt.% or below. Furthermore, the process of the present invention makes it possible to produce the powdery anionic surfactant within a short period of time at a low heating temperature, thus preventing thermal deterioration. As compared with the conventional spray-dried products, the powdery product has a color of KLETT No. 10 or below when formulated into a 10 wt.% aqueous solution, thus providing a white, high-quality product. In addition, the rotary thin-film evaporator used in the present invention has a small size. Further, the aqueous slurry employed in the present invention has a high solid concentration, which reduces the drying load. Therefore, both of the equipment cost and the energy cost can be reduced.

As described above, the inside of the rotary thin-film evaporator is maintained under reduced pressure. In addition to this dry atmosphere condition, in order to obtain a powdery anionic surfactant of improved qualities, air, an inert gas or steam is blown into the rotary thin-film evaporator to lower the content of the impurities such as unreacted alcohol in the anionic surfactant, whereby a high-quality powdery anionic surfactant with reduced odor can be obtained.

More specifically, when air, an inert gas or steam is blown into the rotary thin-film evaporator, the partial pressures of the unreacted alcohol and the by-products in the anionic surfactant are lowered and thus the evaporation of the unreacted alcohol and the by-products is promoted to reduce the content of these impurities. In this treatment, the air, inert gas or steam can be passed in any form of a counter flow, a parallel flow or a cross flow against the anionic surfactant formed into film. Any inert gas may be selected, so long as it has no reactivity with the anionic surfactant. Examples thereof include helium, nitrogen, argon and carbon dioxide, among which nitrogen and carbon dioxide are preferable. Such a gas is to be blown at a ratio of 2 parts by weight or above, preferably from 5 to 500 parts by weight, per 100 parts by weight of the aqueous anionic surfactant slurry. It is not preferable to blow less than 2 parts by weight of the gas, since the efficiency for the removal of the impurities is lowered thereby.

To further illustrate the present invention in more detail, the following Example and Comparative Examples will be given.

[Measurement of color (KLETT No.)]

An anionic surfactant is dissolved in water in a concentration of 10 wt.%. Then the absorbance of this solution at a wavelength of 420 nm is measured by using a spectrophotomer (Model U-3210, manufactured by Hitachi, Ltd.). The color is calculated in accordance with the following formula:

$$\text{color (KLETT No.)} = \text{absorbance} \times 1000.$$

[Measurement of bulk density]

1) A powder tester (manufactured by Hosokawa Micron) is provided over the whole face of the casing thereof with a chute, a space ring, a sieve (710 $\mu$m), a sieve presser and a presser bar.
2) A cup (100 ml) for measuring the apparent specific gravity is weighed.
3) The cup (100 ml) for measuring the apparent specific gravity is placed just under the fixed chute and an appropriate amount of a powdery anionic surfactant is gently placed on the sieve.
4) The voltage of a rheostat is gradually elevated to 50 V and powder is allowed to flow out by vibrating for about 20 seconds. Next, attached blades are vertically set up and the surface of the powder is leveled, followed by weighing by using an even balance. The difference between the weight thus determined and the weight of the cup (100 ml) for measuring the apparent specific gravity corresponds to the weight of the powder. The bulk density is calculated in accordance with the following formula:

$$\text{bulk density (g/ml)} = \text{powder weight (g)}/100.$$

Comparative Example 1

An aqueous slurry having a solid concentration of 70 wt.% of a sodium n-alkyl sulfate having from 8 to 12 carbon atoms was fed into a rotary thin-film evaporator (Hi-Evaolator, manufactured by Sakura Seisakusho) having a heat transfer area of 10 m$^2$ at a temperature of 70°C and at a flow rate of 300 kg/h and produced a powdery sulfate therein. In this step, the inner heat transfer wall was heated to 130°C by passing a heating steam through the jacket, while the inside of the evaporator was maintained at a degree of vacuum of 13.332 kPa (100 Torr). The rotational speed of the rotating blades was 200 rpm (peripheral speed of the tip of the blades: 10.5 m/s) and the clearance between the tips of the rotating blades and the inner heat transfer wall was 1.5 mm, when the system was run without feeding any material. Table 1 shows the results.

Comparative Example 2

Producing a powdery sulfate was effected under the same operation conditions as those described in the above Comparative Example 1 except that the solid concentration of the sodium alkyl sulfate was 30 wt.%. Table 1 shows the results.

Comparative Example 3

An aqueous slurry having a solid concentration of 70 wt.% of a sodium n-alkyl sulfate having from 8 to 12 carbon atoms was fed into a spray-drying apparatus and produced a powdery sulfate. Table 1 shows the results.

Spray-drying of aqueous slurry: aqueous slurry was sprayed downward from a nozzle positioned at the upper part in a spray-drying apparatus.
Dryer: spray-drying apparatus [20 cm (diameter) x 60 cm (height)].
Hot-air temperature: 150 - 200°C.
Hot-air direction: parallel flow.

Comparative Example 4

An aqueous slurry having a solid concentration of 65 wt.% of a sodium n-alkyl sulfate having from 8 to 12 carbon atoms was fed into a rotary thin-film evaporator (Sevcon, manufactured by Hitachi, Ltd.) having a heat transfer area of 0.3 m$^2$ at a temperature of 100°C and at a flow rate of 10 kg/h and produced a powdery sulfate therein. In this step, the inner heat transfer wall of the evaporator was heated to 90°C by passing hot water through the jacket, while the inside of the evaporator was maintained at a degree of vacuum of 26.664 kPa (200 Torr). The rotational speed of the rotating blades was 590 rpm (peripheral speed of the tip of the blades: 3.1 m/s) and the tips of the rotating blades came into contact with the inner heat transfer wall at a clearance of 0 mm, when the system was run without feeding any material. These rotating blades were ones of variable type and a film of the anionic surfactant was formed between the inner heat transfer wall and the tips of the rotating blades during the operation. Table 1 shows the results.

Comparative Example 5

Producing a powdery sulfate was effected under the same operation conditions as those described in the above Comparative Example 4 except that an aqueous slurry having a solid concentration of 80 wt.% of sodium n-polyoxyethylene-alkyl sulfate having from 8 to 12 carbon atoms and an average number of moles of addition of ethylene oxide of 2 was used. Table 1 shows the results.

Example

An aqueous slurry having a solid concentration of 75 wt.% of a potassium n-alkyl sulfate having from 8 to 12 carbon atoms was fed into a rotary thin-film evaporator (Sevcon, manufactured by Hitachi, Ltd.) having a heat transfer area of 0.3 m$^2$ at a temperature of 140°C and at a flow rate of 10 kg/h and produced a powdery sulfate therein. In this step, the inner heat transfer wall of the evaporator was heated to 80°C by passing hot water through the jacket, while the inside of the evaporator was maintained at a degree of vacuum of 53.329 kPa (400 Torr). The rotational speed of the rotating blades: 3.1 m/s) and the tips of the rotating blades came into contact with the inner heat transfer wall at a clearance of 0 mm, when the system was run without feeding any material. Similar to the above Comparative Example 4, a film of the anionic surfactant was formed between the inner heat transfer wall and the tips of the rotating blades during the operation. During the operation, steam was continuously fed from the lower part of the evaporator at a flow rate of 5 kg/h. Table 1 shows the results.
Regarding the results in Table 1, the product of the Example is little contaminated with impurities.

Table 1

| | | Comp. Ex. 1 | Comp. Ex. 2 | Comp. Ex. 3 | Comp. Ex. 4 | Comp. Ex. 5 | Ex. |
|---|---|---|---|---|---|---|---|
| Slurry | anionic surfactant | Na alkyl sulfate | Na alkyl sulfate | Na alkyl sulfate | Na alkyl sulfate | Na polyoxy-ethylene alkyl ether sulfate | K alkyl sulfate |
| | solid concn. (wt.%) | 70 | 30 | 70 | 65 | 80 | 75 |
| | slurry feed temp. (°C) | 70 | 70 | 70 | 100 | 100 | 140 |
| | slurry flow rate (kg/hr) | 300 | 300 | 300 | 10 | 10 | 10 |
| Drying conditions | peripheral speed of the blades (m/sec) | 10.5 | 10.5 | spray-drying (under the conditions as specified in the text) | 3.1 | 3.1 | 3.1 |
| | rotating blade*1/inner heat transfer wall clearance (mm) | 1.5 | 1.5 | | 0 | 0 | 0 |
| | press. in rotary thin-film evaporator (Torr) | 100 | 100 | | 200 | 200 | 400 |
| | inner heat transfer wall temp. (°C) | 130 | 130 | | 90 | 90 | 80 |
| | steam flow rate (kg/hr) | — | — | | — | — | 5 |
| Composition of powdery surfactant | solid content of salt of alkyl sulfate (wt.%) | 92 | 73 | 96 | 93 | 85 | 98 |
| | water content (wt.%) | 1 | 15 | 1 | 2 | 8 | 1 |
| | unreacted alcohol (wt.%) | 3.5 | 3.1 | 3.6 | 3.4 | 2.9 | 0.5 |
| Physicochemical properties of powdery surfactant | bulk density (g/cc) | 0.49 | 0.51 | 0.28 | 0.51 | 0.50 | 0.49 |
| | color, KLETT No. | 4 | 4 | 20 | 4 | 4 | 4 |

*1: the distance between the rotating blades and the inner transfer wall in the running of the system without load.

EP 0 572 957 B1

## Claims

1. A process for producing a powdery anionic surfactant which is selected from the group consisting of alkyl sulfates having a linear or branched alkyl or alkenyl group carrying from 8 to 18 carbon atoms and polyoxyalkylene alkyl ether sulfates having a linear or branched alkyl or alkenyl group carrying from 8 to 18 carbon atoms and an average number of moles of addition of ethylene oxide or propylene oxide of at least 0.5, or a mixture of said salts wherein said powdery anionic surfactant is produced by using an evaporator having a heat transfer wall and rotating blades rotating along the inner surface of said heat transfer wall, which comprises feeding said anionic surfactant in the form of an aqueous slurry thereof having a solid concentration of from 60 to 80 wt.% into said evaporator, forming a film of the anionic surfactant on the inner surface of said heat transfer wall by rotating said blades, and scraping the film from the inner heat transfer wall with the rotating blades and powdering while continuously concentrating, drying the aqueous anionic surfactant slurry and blowing air, an inert gas or steam into the evaporator, wherein the ratio of the air, inert gas or steam to be blown is 2 parts by weight or above per 100 parts by weight of the aqueous anionic surfactant slurry.

2. A process for producing a powdery anionic surfactant as claimed in claim 1, wherein the peripheral speed of the tip of the blades is from 2 to 20 m/s.

3. A process for producing a powdery anionic surfactant as claimed in claim 1, wherein the temperature of the inner surface of the heat transfer wall is from 50 to 140°C.

4. A process for producing a powdery anionic surfactant as claimed in claim 1, wherein the pressure in the evaporator is from 0.133 to 66.661 kPa (1 to 500 Torr).

## Patentansprüche

1. Verfahren zur Herstellung eines pulverförmigen anionischen Tensids, ausgewählt aus der Gruppe, bestehend aus Alkylsulfaten mit einer linearen oder verzweigten, 8 bis 18 Kohlenstoffatome tragenden Alkyl-oder Alkenylgruppe und Polyoxyalkylenalkylethersulfaten mit einer linearen oder verzweigten, 8 bis 18 Kohlenstoffatome tragenden Alkyl- oder Alkenylgruppe und einer mittleren Anzahl von mindestens 0,5 mol an addiertem Ethylenoxid oder Propylenoxid, oder einer Mischung der genannten Salze, worin das genannte pulverförmige anionische Tensid hergestellt wird durch Verwendung eines Verdampfers mit einer Wärmeübertragungswand und rotierenden Blättern, die entlang der inneren Oberfläche der genannten Wärmeübertragungswand rotieren, umfassend Füllen des genannten Verdampfers mit dem genannten anionischen Tensid in Form einer wäßrigen Aufschlämmung mit einer Feststoffkonzentration von 60 bis 80 Gew.-%, dem Ausbilden einer Schicht aus anionischem Tensid auf der inneren Oberfläche der genannten Wärmeübertragungswand durch Rotieren der genannten Blätter, und Abkratzen der Schicht von der inneren Wärmeübertragungswand mit den rotierenden Blättern und Pulverisieren während des kontinuierlichen Konzentrierens, Trocknen der wäßrigen anionischen Tensidaufschlämmung und Einblasen von Luft, einem Inertgas oder Dampf in den Verdampfer, worin das Verhältnis von einzublasender Luft, Inertgas oder Dampf 2 Gewichtsanteile oder darüber pro 100 Gewichtsanteile der wäßrigen anionischen Tensidaufschlämmung ist.

2. Verfahren zur Herstellung eines pulverförmigen anionischen Tensids wie in Anspruch 1 beansprucht, wobei die Umfangsgeschwindigkeit der Enden der Blätter 2 bis 20 m/s beträgt.

3. Verfahren zur Herstellung eines pulverförmigen anionischen Tensids wie in Anspruch 1 beansprucht, wobei die Temperatur der inneren Oberfläche der Wärmeübertragungswand 50 bis 140 °C beträgt.

4. Verfahren zur Herstellung eines pulverförmigen anionischen Tensids wie in Anspruch 1 beansprucht, wobei der Druck in dem Verdampfer 0,133 bis 66,661 kPa (1 bis 500 Torr) beträgt.

## Revendications

1. Procédé de production d'un agent tensio-actif anionique pulvérulent qui est choisi dans le groupe constitué des sulfates d'alkyle ayant un groupe alkyle ou un groupe alcényle linéaire ou ramifié comportant de 8 a 18 atomes de carbone et des sulfates d'éther alkylique de polyoxyalkylène ayant un groupe alkyle ou un groupe alcényle linéaire ou ramifié comportant de 8 à 18 atomes de carbone et un nombre moyen de moles d'addition d'oxyde d'éthylène ou d'oxyde de propylène d'au moins 0,5, ou d'un mélange desdits sels, dans lequel ledit agent tensio-actif anionique pulvérulent est produit en utilisant un évaporateur comportant une paroi de transfert thermique et des lames rotatives tournant le long de la surface interne de ladite paroi de transfert thermique, qui comprend les étapes consistant à introduire ledit agent tensio-actif anionique sous la forme d'une suspension aqueuse de celui-ci ayant une concentration en solides de 60 à 80 % en poids dans ledit évaporateur, à former un film de l'agent tensio-actif anionique sur la surface interne de ladite paroi de transfert thermique par rotation desdites lames, et à racler le film de la paroi de transfert thermique interne avec les lames rotatives et à pulvériser tout en concentranten continu, séchant la suspension aqueuse de l'agent tensio-actif anionique et à insuffler de l'air, un gaz inerte ou de la vapeur d'eau dans l'évaporateur, le rapport de l'air, du gaz inerte ou de la vapeur d'eau, qui doit être insufflé est de 2 parties en poids ou plus pour 100 parties en poids de la suspension aqueuse de l'agent tensio-actif anionique.

2. Procédé de production d'un agent tensio-actif anionique pulvérulent selon la revendication 1, dans lequel la vitesse circonférentielle du bout des lames est de 2 à 20 m/s.

3. Procédé de production d'un agent tensio-actif anionique pulvérulent selon la revendication 1, dans lequel la température de la surface interne de la paroi de transfert thermique est de 50 à 140 °C.

4. Procédé de production d'un agent tensio-actif anionique pulvérulent selon la revendication 1, dans lequel la pression dans l'évaporateur est de 0,133 à 66,661 kPa (1 à 500 Torr).